# NEUE EUROPÄISCHE PATENTSCHRIFT

(11) **EP 1 444 436 B2**
(45) Veröffentlichungstag und Bekanntmachung des Hinweises auf die Entscheidung über den Einspruch: **31.01.2018**
(45) Hinweis auf die Patenterteilung: 20.12.2006
(21) Anmeldenummer: 02801864.6
(22) Anmeldetag: 31.08.2002
(51) Int. Cl.: F03D 11/00

(54) **WINDENERGIEANLAGE MIT IM TURM VORMONTIERTEM STROMLEITUNGSMITTEL**
WIND TURBINE WITH CURRENT CONDUCTING MEANS, WHICH ARE PRE-ASSEMBLED IN THE TOWER THEREOF
EOLIENNE PRESENTANT UNE TOUR DANS LAQUELLE DES MOYENS CONDUCTEURS DE COURANT SONT PREASSEMBLES

(30) Priorität: 24.10.2001 DE 10152557
(43) Veröffentlichungstag der Anmeldung: 11.08.2004
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2002/009747
(87) Internationale Veröffentlichungsnummer: WO 2003/036084

(56) Entgegenhaltungen:
- EP-A- 0 959 546
- EP-A- 1 036 937
- WO-A-01/77527
- DE-A- 4 436 197
- GB-A- 1 432 566
- GB-A- 2 224 294
- US-A- 4 488 696

## Beschreibung

Die Erfindung betrifft eine Windenergieanlage mit einem aus mehreren Turmsegmenten aufgebauten Turm, mit einem im Bereich des Turmkopfes angeordneten Generator, mit einem im Bereich des Turmfußes angeordneten Leistungsmodul und mit Stromleitungsmitteln zur Stromübertragung vom Generator zum Leistungsmodul zB WO-A-01/77527.

Das elektrische Leistungsmodul einer Windenergieanlage, das elektrische Einheiten wie Transformator, Schaltschränke, ggf. Wechselrichter, Mittelspannungsanlage, Niederspannungsverteilung usw. umfasst, ist bei bekannten Windenergieanlagen unterhalb der Generatorebene und häufig im Bereich des Turmfußes des Turmes der Windenergieanlage angeordnet. Dafür bzw. für einige dieser Komponenten ist meist ein eigenes, kleines Gebäude außerhalb der Windenergieanlage vorgesehen. Um die von dem im Bereich der Turmspitze innerhalb einer Gondel angeordneten Generator erzeugte elektrische Energie zum Leistungsmodul zu übertragen, sind Stromleitungsmittel vorgesehen, die zumeist innerhalb des Turmes verlaufen und in Form von Kabeln ausgestaltet sind. Diese Kabel werden in den Turm eingebracht, nachdem dieser aufgestellt ist. Dies ist ein aufwändiges Verfahren, da die Kabel über die gesamte Turmhöhe in einem separaten Arbeitsgang installiert werden müssen. Weiterhin ist dieser Arbeitsgang von der vorherigen Errichtung des Turmes abhängig.

Der vorliegenden Erfindung liegt die Aufgabe zugrunde, eine Windenergieanlage anzugeben, die sich einfacher und damit auch günstiger und schneller errichten lässt.

Diese Aufgabe wird erfindungsgemäß durch eine Windenergieanlage nach Anspruch 1 gelöst.

Die Segmente der Stromleitungsmittel sind somit vorgefertigt und werden bevorzugt an den Turmsegmenten angebracht, bevor aus den einzelnen Turmsegmenten der Turm errichtet wird. Es ist somit nicht mehr erforderlich, nach Errichtung des Turmes aufwändig Kabel durch den Turm zu ziehen, um Generator und Leistungsmodul elektrisch miteinander zu verbinden. Durch die erfindungsgemäßen Maßnahmen lassen sich die gesamte Errichtungszeit der Windenergieanlage verkürzen und die Kosten für die Errichtung verringern, ohne dass irgendwelche technischen Nachteile in Kauf genommen werden müssten.

Vorteilhafte Ausgestaltungen der erfindungsgemäßen Windenergieanlage sind in den Unteransprüchen angegeben. Bevorzugt ist vorgesehen, dass die Segmente der Stromleitungsmittel nur in einem Bereich, vorzugsweise im in aufgebautem Zustand obersten Bereich, mit den zugehörigen Turmsegment fest verbunden sind. Diese Befestigung mit dem Turmsegment erfolgt bevorzugt vor Errichtung des Turmes, so dass die Turmsegmente inklusive der daran befestigten Segmente der Stromleitungsmittel vorgefertigt werden. Da das Segment der Stromleitungsmittel nur an einem Punkt an dem Turm fest angebracht ist, hängt es zwar fest, aber doch in gewissen Grenzen beweglich an der Innenwand des Turmsegmentes und kann somit noch ausgerichtet werden, um möglichst einfach und gut mit den nächsten Segmenten der Stromleitungsmittel des nächsten Turmsegmentes verbunden zu werden.

Zur weiteren Befestigung der Segmente der Stromleitungsmittel innerhalb des Turmsegments können allerdings auch noch zusätzliche Halteelemente an der Innenwand des Turmes vorgesehen sein, mit denen die Segmente der Stromleitungsmittel vor oder nach Errichtung des Turmes fest verbunden werden, um diese möglichst gut zu fixieren.

Durch die Verwendung von Stromschienen als Stromleitungsmitteln sind zur Überbrückung von aus der Innenwand des Turmes herausstehenden Teilen und zur Verbindung von Stromschienensegmenten flexible Verbindungsschienen vorgesehen. Diese werden nach Errichtung des Turmes dazu verwendet, die Stromschienensegmente zu verbinden, sofern diese nicht unmittelbar aneinander reichen oder falls Lücken oder sonstige Hindernisse zwischen den Stromschienensegmenten beispielsweise ein Flansch am Turmschienensegment überbrückt werden muß.

Um einerseits das Wartungspersonal beim Besteigen des Turmes durch dessen Innenraum vor Kontakt mit den Stromschienen zu schützen und eine elektrische Isolierung zu gewährleisten und andererseits die Stromleitungsmittel vor Beschädigungen zu schützen, ist ein Schutzblech, vorgesehen, das beispielsweise fest mit der Innenwand des Turmes verbunden ist und die Stromleitungsmittel vollständig vor Berührungen schützt. Auch diese Schutzhülle kann in einzelne Segmente aufgeteilt sein, die ebenso wie die Segmente der Stromleitungsmittel an den Turmsegmenten vormontiert sind. Dadurch wird eine weitere Verkürzung und Vereinfachung der Errichtung der Windenergieanlage erreicht.

Die Erfindung wird nachfolgend anhand der Zeichnungen näher erläutert. Es zeigen:
Fig. 1 eine Darstellung einer erfindungsgemäßen Windenergieanlage,
Fig. 2 einen Aufschnitt einer solchen Windenergieanlage mit zwei Turmsegmenten und
Fig. 3 eine perspektivische Darstellung erfindungsgemäß vorgesehener Stromschienen.

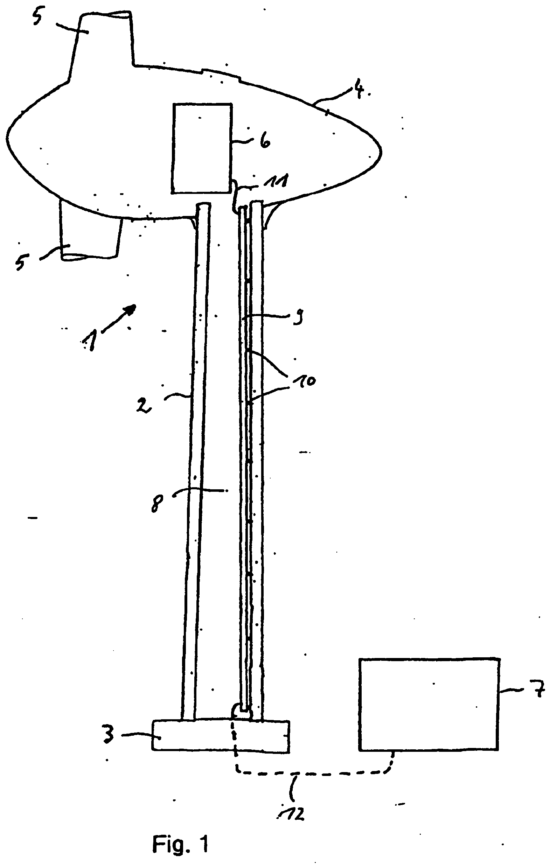

Die in Figur 1 schematisch dargestellte, erfindungsgemäße Windenergieanlage 1 weist einen Turm 2 mit einem Fundament 3, eine im Bereich der Turmspitze drehbar gelagerte Gondel 4 sowie eine im Bereich des Turmfußes, beispielsweise in einem separaten Häuschen, angeordnetes Leistungsmodul 7 auf. Innerhalb der Gondel 4 ist eine um eine horizontale Achse drehbar gelagerter Rotor mit mehreren Rotorblättern 5 sowie ein elektrischer Generator 6 angeordnet. Durch die auf die Rotorblätter 5 wirkenden Windkräfte wird der Rotor in Drehung versetzt und treibt den Generator 6 zur Erzeugung elektrischer Energie an.

Zur Übertragung der von dem Generator 6 erzeugten Energie an das Leistungsmodul 7, das zahlreiche elektrische Einheiten aufweist, nämlich einen Transformator oder ggf. einen Wechselrichter zur Weiterbearbeitung des elektrischen Stromes, bevor dieser in das Netz eingespeist bzw. an einen Verbraucher weitergeleitet wird, sind erfindungsgemäß im Innenraum 8 des Turmes 2 an der Wand mittels Befestigungselementen 10 angebrachte Stromschienen, vorzugsweise zwei Stromschienen, vorgesehen. Diese sind elektrisch leitend und über ein Kabel 11 mit dem Generator sowie über eine Verbindungsleitung 12, die vorzugsweise durch das Fundament 3 und den Untergrund führt, mit dem Leistungsmodul 7 elektrisch verbunden.

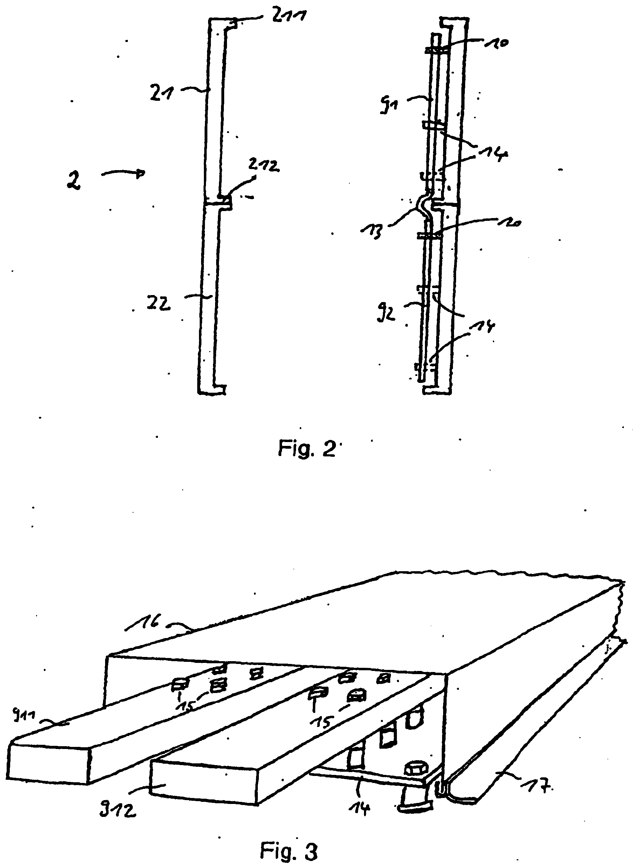

Die Stromschienen 9 sind starr ausgebildet und bestehen bevorzugt aus einzelnen Stromschienensegmenten, wie dies beispielsweise in Figur 2 näher dargestellt ist. Dort sind zwei Turmsegmente 21, 22 gezeigt, aus denen der Turm 2 bevorzugt aufgebaut wird. Solche Turmsegmente 21, 22 können beispielsweise aus Stahl oder auch aus Beton bestehen.

Diese Turmsegmente 21, 22 werden vorgefertigt und am Standort der Windenergieanlage zu dem Turm zusammengefügt. Um die Einrichtungszeit noch weiter zu verkürzen und die Arbeit zu vereinfachen und somit auch die Kosten der gesamten Windenergieanlage zu verringern, werden bevorzugt die Stromschienensegmente 91, 92 ebenfalls vor Errichtung des Turmes 2 an den entsprechenden Stellen der einzelnen Turmsegmente 21, 22 fest angebracht. Vorzugsweise erfolgt die Befestigung der Stromschienensegmente 91, 92 nur im oberen Bereich des jeweiligen Turmsegmentes 21, 22 mittels einer Befestigungsvorrichtung 10, während der restliche Teil der Stromschienensegmente 91, 92 noch in gewissen Grenzen beweglich ist, um die Verbindung mit nachfolgenden Stromschienensegmenten zu vereinfachen. Durch diesen Aufbaü-können auch Relativbewegungen zwischen dem Turm 2 und den Stromschienen 91, 92, z.B. infolge unterschiedlicher Ausdehnungskoeffizienten, ausgeglichen werden. Es kann jedoch auch vorgesehen sein, dass weitere Halteelemente 14 verwendet werden, welche die Stromschienensegmente 91, 92 auf ihrer gesamten Länge führen. Dazu kann der Querschnitt der Öffnung für die Stromschienensegmente 91, 92 in den Halteelementen 14 größer bemessen sein, als der Querschnitt der Stromschienensegmente 91, 92 selbst. Auf diese Weise wird eine Relativbewegung der Stromschienensegmente 91, 92 in den Halteelementen 14 ermöglicht und gleichzeitig werden die Stromschienen 91, 92 geführt und in ihrer Bewegbarkeit eingeschränkt.

Um die Stromschienensegmente 91, 92 elektrisch zu verbinden und dabei ggf. vorhandene, in den Innenraum vorstehende Teile, wie beispielsweise am unteren und oberen Rand der Turmsegmente 21, 22 vorhandene Flansch 211, 212 zu überbrücken, werden isolierte, flexible Verbindungsschienen 13 verwendet, deren Form sich beim Anbringen an den beiden Stromschienensegmenten 91, 92 per Hand verändern läßt. Durch diese Verbindungsschienen 13 können auch Materialausdehnungen bzw. Kontraktionen, z.B. durch Temperaturschwankungen, ausgeglichen werden.

In Figur 3 ist eine perspektivische Darstellung zweier paralleler Stromschienensegmente 911, 912 gezeigt. Diese sind mittels Schrauben 15 an der Haltevorrichtung 14 fest verschraubt. Dabei können Isoliermittel vorgesehen sein, um die Stromschienensegmente 911, 912 gegenüber den Haltevorrichtungen 14 zu isolieren. Alternativ können natürlich auch die Haltevorrichtungen 14 selbst aus einem isolierenden Material hergestellt sein. Die Haltevorrichtung 14 selbst ist fest mit der Innenwand des Turmsegmentes verschraubt.

Zum Schutz vor Berührungen der Stromschienen 911, 912 beim Betrieb der Windenergieanlage ist außerdem ein Schutzblech 16 vorgesehen, das ebenfalls wie die Stromschienensegmente 911, 912 vor Errichtung des Turmes 2 in die einzelnen Turmsegmente bereits eingebaut werden kann. Mittels einer Führungsschiene 17, die beispielsweise aus einem festen Gummi bestehen kann, wird einerseits diese Schutzhülle fixiert und andererseits gegenüber dem Turmsegment isoliert Zur Befestigung des Schutzbleches 16 können aber auch noch weitere Mittel, die vorliegend nicht gezeigt sind, vorgesehen sein.

Weiterhin können in und/oder an diesen als Schutzhüllen vorgesehenen Schutzblechen 16 weitere Einrichtungen wie Steckdosen, Leuchten, etc. angebracht werden, so dass diese ebenfalls auf einfache Weise vormontiert werden können. Außerdem vermeidet insbesondere ein Einbau dieser Einrichtungen in die Schutzhülle 16 eine exponierte Montage an der Turminnenwand und führt damit zu einer verringerten Gefahr einer Beschädigung, z.B. durch herabfallende Gegenstände während und nach der Errichtung des Turmes.

## Patentansprüche

1. Windenergieanlage (1) mit einem aus mehreren Turmsegmenten (21, 22) aufgebautem Turm (2), mit einem im Bereich des Turmkopfes (4) angeordneten Generator (6) zur Stromerzeugung und mit Stromleitungsmitteln (9) zur Stromableitung des erzeugten Stroms aus dem Turmkopf,
**dadurch gekennzeichnet, dass** die Stromleitungsmittel (9) segmentiert in den Turmsegmenten (21, 22) vormontiert sind und dass die Windenergieanlage ein Leistungsmodul (7) aufweist, wobei die Stromleitungsmittel (9) zur Stromübertragung vom Generator (6) zum Leistungsmodul (7) vorgesehen sind und dass das Leistungsmodul (7) im Bereich des Turmfußes angeordnet ist und dass die Stromleitungsmittel (9) durch eine Abdeckung (16), insbesondere ein Abdeckblech, vor Berührung geschützt sind und dass das Leistungsmodul einen Transformator oder Wechselrichter zur Weiterverarbeitung des elektrischen Stroms, bevor dieser in das Netz bzw. an den Verbraucher weitergeleitet wird, aufweist und dass die Stromleitungsmittel (9) mit Haltern (10, 14) an dem Turmsegment (21, 22) befestigt sind und dass die Stromleitungsmittel (9) als Schienen ausgebildet sind und dass zur Überbrückung von aus der Innenwand des Turmes herausstehenden Teilen und zur Verbindung von Stromschienensegmenten (91, 92) flexible Verbindungsschienen (13) vorgesehen sind.

2. Windenergieanlage nach einem der vorstehenden Ansprüche,
**dadurch gekennzeichnet, dass** die Segmente (91, 92) der Stromleitungsmittel (9) nur in einem Bereich, vorzugsweise im in aufgebautem Zustand obersten Bereich mit dem zugehörigen Turmsegment (21, 22), fest verbunden sind.

## Claims

1. Wind turbine (1) having a tower (2) which is constructed from a plurality of tower segments (21, 22), having a generator (6) which is arranged in the region of the tower head (4) for generating power and having power conduction means (9) for discharging the power produced from the tower head,
**characterised in that** the power conduction means (9) are preassembled in the tower segments (21, 22) in a segmented manner and **in that** the wind turbine has a power module (7), wherein the power conduction means (9) are provided for transmitting power from the generator (6) to the power module (7), and **in that** the power module (7) is arranged in the region of the tower base and **in that** the power conduction means (9) are protected from contact by means of a cover (16), in particular a covering sheet, and **in that** the power module has a transformer or an inverter for further processing the electrical current before it is directed further into the network or to the consumer, and **in that** the power conduction means (9) are secured by means of retention members (10, 14) to the tower segment (21, 22) and **in that** the power conduction means (9) are constructed as rails and **in that** flexible connection rails (13) are provided in order to bridge components protruding out of the inner wall of the tower and to connect power rail segments (91, 92).

2. Wind turbine according to the preceding claim,
**characterised in that** the segments (91, 92) of the power conduction means (9) are securely connected to the associated tower segment (21, 22) only in one region, preferably in the uppermost region in the constructed state.

## Revendications

1. Eolienne (1) avec une tour (2) composée de plusieurs segments de tour (21, 22), avec un générateur (6) disposé dans la zone de la tête de tour (4) pour la génération de courant et avec des moyens conducteurs de courant (9) pour la dérivation de courant du courant généré de la tête de tour,
**caractérisée en ce que** les moyens conducteurs de courant (9) sont préassemblés de manière segmentée dans les segments de tour (21, 22) et que l'éolienne présente un module de puissance (7), dans laquelle les moyens conducteurs de courant (9) sont prévus pour la transmission de courant du générateur (6) au module de puissance (7) et que le module de puissance (7) est disposé dans la zone du pied de tour et que les moyens conducteurs de courant (9) sont protégés par un recouvrement (16), en particulier une tôle de recouvrement, du contact et que le module de puissance présente un transformateur ou un onduleur pour le retraitement du courant électrique avant que celui-ci ne soit transmis dans le réseau ou au consommateur, et que les moyens conducteurs de courant (9) sont fixés avec des supports (10, 14) au segment de tour (21, 22) et que les moyens conducteurs de courant (9) sont réalisés comme des rails et que, pour le pontage de parties dépassant de la paroi intérieure de la tour et pour la liaison de segments de rail conducteur (91, 92), sont prévus des rails de liaison flexibles (13).

2. Eolienne selon l'une des revendications précédentes,
**caractérisée en ce que** les segments (91, 92) des moyens conducteurs de courant (9) sont reliés fixement seulement dans une zone, de préférence dans la zone supérieure à l'état construit, au segment de tour (21, 22) correspondant.
